## Europäisches Patentamt

(19) **European Patent Office**

**Office européen des brevets**

(11) Veröffentlichungsnummer: **0 056 579**
**B1**

(12) **EUROPÄISCHE PATENTSCHRIFT**

(45) Veröffentlichungstag der Patentschrift:
27.03.85

(51) Int. Cl.⁴: **B 60 C 7/12,** B 60 C 7/24

(21) Anmeldenummer: 82100043.7

(22) Anmeldetag: 07.01.82

(54) Verfahren zur Herstellung eines Fahrzeugreifens, insbesondere für Zweiradfahrzeuge wie Fahrräder oder Rollstühle.

(30) Priorität: 17.01.81 DE 3101408

(43) Veröffentlichungstag der Anmeldung:
28.07.82 Patentblatt 82/30

(45) Bekanntmachung des Hinweises auf die Patenterteilung:
27.03.85 Patentblatt 85/13

(84) Benannte Vertragsstaaten:
**BE DE FR GB IT NL**

(56) Entgegenhaltungen:
**EP - A - 0 010 224**
**EP - A - 0 017 223**
**FR - A - 1 361 817**
**GB - A - 1 429 676**
**GB - A - 1 524 472**
**US - A - 3 948 303**
**US - A - 4 033 395**

(73) Patentinhaber: **BAYER AG, Konzernverwaltung RP**
**Patentabteilung, D-5090 Leverkusen 1 Bayerwerk (DE)**

(72) Erfinder: **Ippen, Jakob. Dr., Schleiermacher Strasse 17,**
**D-5090 Leverkusen 1 (DE)**
Erfinder: **Stüttgen, Friedel, Albrecht-Duerer-Strasse 94,**
**D-5024 Pulheim (DE)**

BUNDESDRUCKEREI BERLIN

**Beschreibung**

Die Erfindung betrifft ein Verfahren zur Herstellung enes Fahrzeugreifens, insbesondere für Zweiradfahrzeuge wie Fahrräder oder Rollstühle, aus einem der Felgenkontur angepaßten Reifenfuß, Seitenwänden und einer Lauffläche, die derart ineinander übergehen, daß sie einen umlaufenden geschlossenen Hohlraum bilden, wobei der Reifen durch Extrusion hergestellt wird, das extrudierte Profil vulkanisiert und auf die Felge aufgezogen wird und anschließend ein umlaufender Verstärkungsring aus Kunststoff zur Versteifung des Reifenfußes in den Reifen eingebracht wird.

Der Verstärkungsring wird bei diesem aus der US-A 3 948 303 bekannten Verfahren aus einer Nylonstange geformt, deren Enden nach dem Einbringen dieser Stange in den Hohlraum des Reifens mit einer Klemmhülse miteinander verbunden werden. Diese Klemmhülse verdickt den Verstärkungsring an einer Stelle des Umfangs. Außerdem können die Enden des auf den gewünschten Reifenumfang zugeschnittenen Reifenprofiles erst fest miteinander verbunden werden, nachdem der Verstärkungsring mit der Klemmhülse geschlossen wurde. Da der Verstärkungsring jedoch den Reifenfuß fest umschließt um einen Preßsitz der Reifen auf der Felge zu gewährleisten, ist die zum Schließen des Verstärkungsringes notwendige Verschiebung des Reifenprofils relativ zum Verstärkungsring schwierig. Aufgabe der Erfindung ist es daher, den Verstärkungsring auf einfache Weise in den Reifen einzubringen nachdem die Stirnseiten des Reifenprofils auf Stoß fest miteinander verbunden worden sind.

Diese Aufgabe wird bei dem Verfahren der eingangs genannten Art dadurch gelöst, daß eine dem Querschnitt des Verstärkungsringes entsprechende umlaufende kanalförmige Aussparung im Reifenfuß vorgesehen ist, die über mindestens einen Anspritzkanal mit einer aushärtbaren Kunststoffmischung gefüllt wird.

Die Reifen sind beim Übergang der Seitenwände in den Reifenfuß eingebuchtet, so daß die Seitenwände durch das Felgenhorn abgestützt sind. Der Reifenfuß selbst ist in seiner Form der Felgenkontur angepaßt. Dadurch wird zusammen mit der umlaufenden Kunststoffverstärkung im Reifenfluß ein sicherer Preßsitz der Reifen auf der Felge erreicht. Die Kunststoffverstärkung hat i. a. einen bandförmigen, annähernd rechteckigen Querschnitt (vgl. Figur 1 und 2). Vorzugsweise ist die Kunststoffverstärkung parallel zur Felgenschräge orientiert und kann dann z. B. einen winkelförmigen Querschnitt haben (vgl. Figur 3).

Zweckmäßigerweise werden die Reifen zunächst mit einer geeigneten Aussparung im Reifenfuß hergestellt, in die dann die Kunststoffverstärkung eingebracht wird. Besonders vorteilhaft und wirtschaftlich stellt man die Reifen durch Extrusion entsprechender Profilkörper und anschließender Vulkanisation her. Die Vulkanisation kann kontinuierlich, z. B. durch Ultrahochfrequenz erfolgen. Die extrudierten und vulkanisierten Profile werden auf die den gewünschten Reifenumfang entsprechende Länge zugeschnitten und ihre Stirnseiten auf Stoß fest miteinander verbunden. Es ist also nicht notwendig für jeden Reifendurchmesser eine besondere teure Vulkanisationsform bereitzuhalten.

In die Lauffläche der extrudierten Längsprofile kann vor der Vulkanisation durch Querwalzen ein Profil geprägt werden, welches unter Umständen die Griffigkeit des Reifen verbessert.

Die Fertigung gegenüber den bisher üblichen Luftreifen wird vereinfacht, da wegen des einheitlichen Werkstoffes der Reifen nicht lagenweise aufgebaut werden muß. Die wirtschaftliche Ersparnis ist also groß.

Der vorgefertigte Reifen wird über das Felgenhorn geschoben. Das Aufziehen des Reifens ist einfach, da die Vorspannung in Umfangsrichtung nur 0,5 bis 1% betragen muß.

Die Kunststoffverstärkung wird vorzugsweise erst nach Herstellung und Aufziehen des Reifens auf die Felge in die Aussparung im Reifenfuß eingebracht. Dazu wird über Anspritzkanäle in der Felge ein flüssiges reaktionsfähiges Kunststoffgemisch in die Aussparung eingedrückt und ausgehärtet. Bevorzugt sind Kunststoffgemische mit Reaktionszeiten von etwa 10 Sekunden. Nach der Aushärtung liegt ein einwandfreier Formschluß zur Übertragung der Antriebs- und Seitenkräfte vor, so daß die Kräfte des Fahrzeugs sicher auf die federnden Seitenwände und über die Lauffläche auf den Untergrund übertragen werden.

Die Reifen besitzen gute Rundlaufeigenschaften und eine hohe Seitenstabilität. Auch bei höherer Geschwindigkeit auftretende Zentrifugalkräfte sind nicht in der Lage, die Reifen von der Felge zu lösen. Die Reifen sind unempfindlich gegen Schnitt- und Nagelbeschädigungen da keine Druckluft als Federungselement vorhanden ist, die entweichen kann. Sie sind besonders für Krankenfahrstühle oder Zweiradfahrzeuge geeignet.

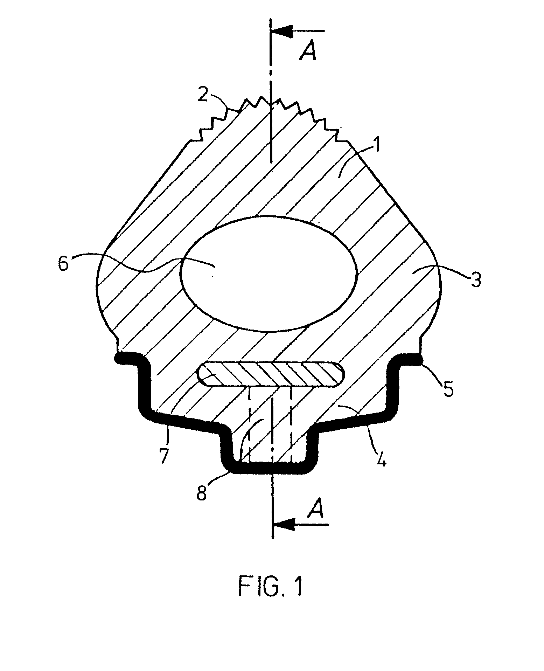

Verschiedene Ausführungsformen der erfindungsgemäßen Reifen sind in Fig. 1—4 dargestellt. Es zeigen:

Fig. 1 einen Querschnitt durch einen bevorzugten Reifen,

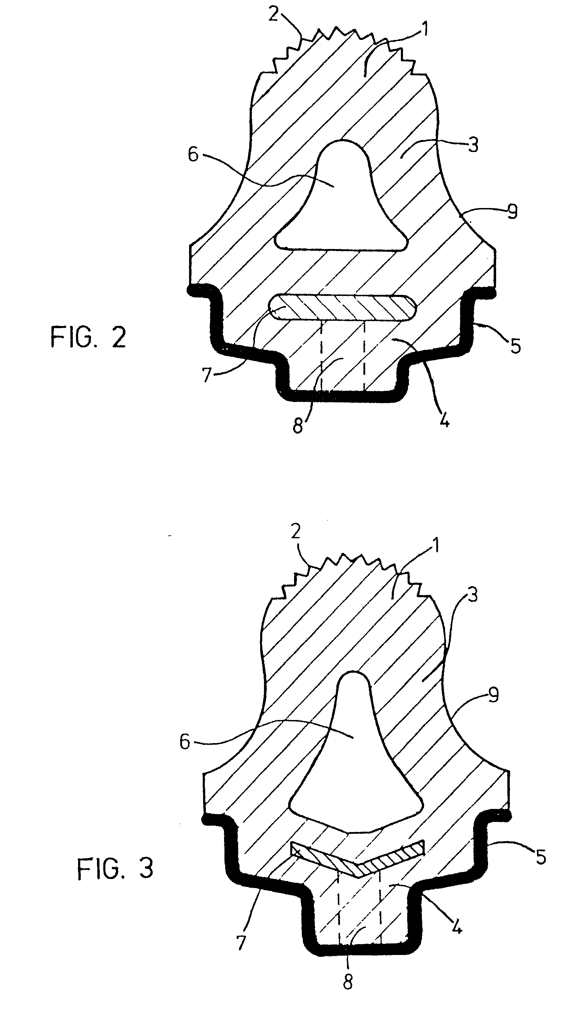

Fig. 2 und 3 Querschnitte durch zwei weitere Ausführungsformen und

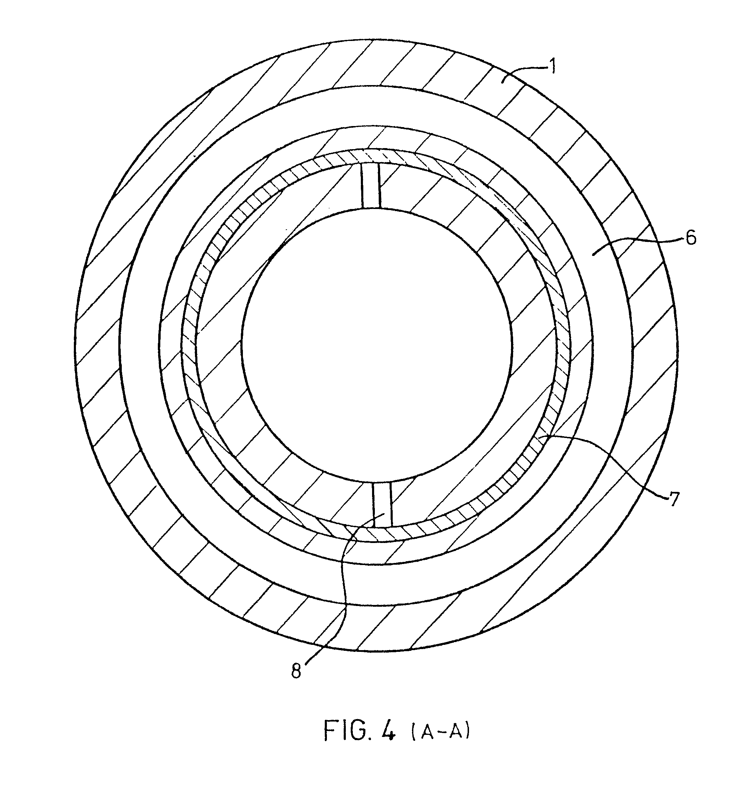

Fig. 4 einen Längsschnitt durch einen bevorzugten Reifen entlang der Linie A-A in Fig. 1.

In Fig. 1 ist ein extrudierter Reifen auf der Felge im Querschnitt dargestellt. Die im Zenit vorhandene maximale Dicke der Lauffläche (1) mit Profilen (2) geht unter stetiger Verjüngung in die Seitenwand (3) über, an die sich der umlaufende Reifenfuß (4), der auf die Felgenkontur (5) abgestimmt ist, anschließt. Der ellipsenförmige Hohlraum (6) dient dazu, den Federkomfort des Reifen zu gewährleisten. Im Reifenfuß befindet sich eine umlaufende Aussparung (7), die an 2 Stellen des Umfangs mit 2 Einspritzkanälen (8) verbunden ist. Die Aussparung (7) wird über die beiden Einspritzkanäle (8) mit einer schnellhärtenden Kunststoffmischung gefüllt.

Fig. 2 zeigt einen Querschnitt durch einen Reifen mit Lauffläche (1), Profilen (2), Reifenfuß (4) mit Aussparung (7), Felge (5) und Anspritzkanal (8). Zur Abstützung der Seitenwand (3) verläuft hier deren äußere Konturlinie (9) bogenförmig zum Felgenhorn. Dementsprechend ist der Hohlraum (6) zwischen Lauffläche (1) und Reifenfuß (4) glockenförmig ausgebildet, so daß der Reifen eine vorgegebene Einfederungskennlinie besitzt.

Fig. 3 zeigt einen Querschnitt durch einen ähnlichen Reifen wie in Fig. 2 mit Lauffläche (1), Profilen (2), Seitenwand (3) mit Konturlinie (9), Reifenfuß (4), Felge (5) und Anspritzkanal (8).

Die Aussparung (7) im Reifenfuß (4) verläuft hier jedoch parallel zur Felgenschräge und hat daher die Form eines Winkels. Dementsprechend ist der Hohlraum (6) keilförmig ausgebildet.

Fig. 4 zeigt einen Längsschnitt durch den Reifen der Fig. 1 entlang A-A mit Lauffläche (1), Hohlraum (6), Aussparung (7) und die darin mündenden Anspritzkanäle (8).

Die Reifen der Erfindung können aus jedem beliebigen Natur- oder Synthesekautschuk hergestellt werden, dessen Vulkanisatwerte eine Shore-A-Härte von 45—80 und einen Spannungswert von 3,0 bis 9,0 MPa bei 300% Dehnung aufweisen. Besonders geeignet sind Naturkautschuk, Styrolbutadienkautschuk, Polybutadien und Ethylen/Propylen-Terpolymerisat-Kautschuk. Das Gewicht des Reifens ist dem des normalen Luftreifens vergleichbar. Die Reifen können z. B. mit der nachfolgenden Kautschukmischung hergestellt werden.

| | |
|---|---|
| Naturkautschuk | 100,0 Gew.-Teile |
| Mittelaktiv, gefällte Kieselsäure | 45,0 Gew.-Teile |
| Titandioxid | 3,0 Gew.-Teile |
| Mineralöl, naphthenisch | 2,0 Gew.-Teile |
| Gemisch Kohlenwasserstoffe | 0,8 Gew.-Teile |
| ungesättigter Ether | 2,0 Gew.-Teile |
| Stearinsäure | 1,0 Gew.-Teile |
| Diphenylamin Derivat | 0,6 Gew.-Teile |
| Gemisch aralkylierter Phenole | 0,6 Gew.-Teile |
| Ethylenglykol | 1,5 Gew.-Teile |
| Triethanolamin | 1,5 Gew.-Teile |
| Zinkoxid | 5,0 Gew.-Teile |
| Phthalsäureanhydrid | 0,5 Gew.-Teile |
| gecoatetes Calciumoxid | 7,5 Gew.-Teile |
| Farbe (rot oder grün) | 1,5 Gew.-Teile |
| Zinksalz von 2-Merkaptobenzothiazol | 1,2 Gew.-Teile |
| Di-ortho-tolylguanidin | 0,4 Gew.-Teile |
| Schwefel | 2,0 Gew.-Teile |

| | |
|---|---|
| Mischungsplastizität / 80° C | |
| Defo-Härte / Defo-Elastizität | 500 / 16 |
| Zugfestigkeit (MPa) | 19,9 |
| Bruchdehnung (%) | 600 |
| Spannungswert bei 300% Dehnung (MPa) | 5,6 |
| Weiterreißfestigkeit nach Pohle (N) | 280 |
| Härte bei 20° C (Shore A) | 56 |
| Stoßelastizität (DIN 53512) (%) | 62 |

Für die Kunststoffverstärkung im Reifenfuß kann im Prinzip jede reaktionsfähige, härtbare Kunststoffmischung verwendet werden. Vorzugsweise besteht die Verstärkung aus einem Polyurethan. Sie kann z. B. mit den beiden folgenden Rezepturen hergestellt werden.

Rezeptur 1

| | |
|---|---|
| $C_4$-Polyether, Molgewicht 2000 | 100,0 Gew.-Teile |
| Toluylendiisocyanat | 24,4 Gew.-Teile |
| 4-Chlor-3,5-Diamino-benzoesäureisobutylester | 14,7 Gew.-Teile |

Eigenschaften:

| | | |
|---|---|---|
| Härte | DIN 53305 (Shore A) | 87 |
| $\sigma$ B | DIN 53504 (MPa) | 37 |
| $\varepsilon$ B | DIN 53504 (%) | 550 |

# 0 056 579

| | | |
|---|---|---|
| $\sigma$ 100% | DIN 53504 (MPa) | 8 |
| $\sigma$ 300% | DIN 53504 (MPa) | 13 |

Rezeptur 2

| | |
|---|---|
| Adipinsäure-Butandiol-Ethylenglykol-Mischester | 100,0 Gew.-Teile |
| 4,4'-Diisocyanato-diphenylmethan | 40,0 Gew.-Teile |
| 1,4 Butandiol | 9,0 Gew.-Teile |

Eigenschaften:

| | | |
|---|---|---|
| Härte | DIN 53305 (Shore A | 80 |
| $\sigma$ B | DIN 53504 (MPa) | 34 |
| $\varepsilon$ B | DIN 53504 (%) | 620 |
| $\sigma$ 100% | DIN 53504 (MPa) | 7,0 |
| $\sigma$ 300% | DIN 53504 (MPa) | 12,0 |

Es handelt sich in beiden Fällen um NCO-Prepolymere auf der Basis von Adipinsäureestern, BBG- und $C_4$-Polyethern (Molgewicht zwischen 1000 und 5000) und aromatischen Isocyanaten, im ersten Fall mit aromatischen oder aliphatischen di- oder mehrfunktionellen Aminen umgesetzt.

## Patentansprüche

1. Verfahren zur Herstellung eines Fahrzeugreifens, insbesondere für Zweiradfahrzeuge wie Fahrräder oder Rollstühle, aus einem der Felgenkontur angepaßten Reifenfuß (4), Seitenwänden (3) und einer Lauffläche (1), die derart ineinander übergehen, daß sie einen umlaufenden geschlossenen Hohlraum (6) bilden, wobei der Reifen durch Extrusion hergestellt wird, das extrudierte Profil vulkanisiert und auf die Felge (5) aufgezogen wird und anschließend ein umlaufender Verstärkungsring aus Kunststoff zur Versteifung des Reifenfußes (4) in den Reifen eingebracht wird, dadurch gekennzeichnet, daß eine dem Querschnitt des Verstärkungsringes entsprechende umlaufende kanalförmige Aussparung (7) im Reifenfuß (4) vorgesehen ist, die über mindestens einen Anspritzkanal (8) mit einer aushärtbaren Kunststoffmischung gefüllt wird.

2. Verfahren nach Anspruch 1, dadurch gekennzeichnet, daß die kanalförmige Aussparung im Reifenfuß parallel zur Felgenschräge verläuft.

3. Verfahren nach Anspruch 1 oder 2, dadurch gekennzeichnet, daß für den Verstärkungsring Polyurethan verwendet wird.

## Claims

1. A method of making a vehicle tyre, more particularly for two-wheeled vehicles, such as bicycles or wheelchairs, of a base (4) adapted to the contour of the rim, sidewalls (3) and a tread (1) which merge with one another in such a way that they form an encircling empty space, the tyre being made by extrusion, the profile thus extruded being vulcanized and fitted onto the rim (5) and an encircling reinforcing ring of plastic then introduced into the tyre to strengthen the base (4), characterized in that an encircling channel-like recess (7) corresponding to the cross-section of the reinforcing ring is provided in the base (4) of the tyre, being filled through at least one injection passage (8) with a curable plastics mixture.

2. A method as claimed in Claim 1, characterized in that the channel-like recess in the base of the tyre runs parallel to the slope of the rim.

3. A method as claimed in Claim 1 or 2, characterized in that polyurethane is used for the reinforcing ring.

## Revendications

1. Procédé de fabrication d'un bandage pneumatique pour véhicules, en particulier, pour véhicules à deux roues tels que des bicyclettes ou des chaises roulantes, ce bandage étant constitué d'un talon (4) adapté au contour de la jante, de flancs (3) et d'une bande de roulement (1) passant l'un dans l'autre de façon à former un espace creux périphérique fermé (6), le bandage pneumatique étant réalisé par extrusion, tandis que le profilé extrudé est vulcanisé et monté sur la jante (5), après quoi, afin de renforcer le talon (4) du bandage pneumatique, on introduit, dans ce dernier, un anneau de renforcement périphérique en matière synthétique, caractérisé en ce que, dans le talon (4) du bandage pneumatique, on prévoit un évidement périphérique en forme de canal (7) correspondant à la section

4

transversale de l'anneau de renforcement et qui est rempli, via au moins un canal d'injection (8), d'un mélange durcissable de matière synthétique.

2. Procédé suivant la revendication 1, caractérisé en ce que l'évidement en forme de canal ménagé dans le talon du bandage pneumatique s'étend parallèlement à l'inclinaison de la jante.

3. Procédé suivant la revendication 1 ou 2, caractérisé en ce que, pour l'anneau de renforcement, on utilise le polyuréthane.

FIG. 1

FIG. 2

FIG. 3

FIG. 4 (A-A)